# FASCICULE DE BREVET EUROPEEN

(11) **EP 2 619 471 B1**
(45) Date de publication et mention de la délivrance du brevet: **25.03.2015**
(21) Numéro de dépôt: 11757671.0
(22) Date de dépôt: 04.08.2011
(51) Int. Cl.: F16D 13/68, F16D 13/64

(54) **DISQUE DE FRICTION D'EMBRAYAGE**
KUPPLUNGSSCHEIBE FÜR EINE KUPPLUNG
FRICTION DISK FOR A CLUTCH

(30) Priorité: 21.09.2010 FR 1057531
(43) Date de publication de la demande: 31.07.2013
(73) Titulaire: Valeo Matériaux de Friction, 87020 Limoges (FR)
(72) Inventeur: BOUTAUD, Jean-Pierre, 87350 Panazol (FR); BRAULT, Cyril, 87000 Limoges (FR); ALIX, Isabelle, 87290 Chateauponsac (FR); JUILLARD, Eric, 87100 Limoges (FR); VICTOR, Thierry, 87520 Vayrac (FR); DENIS, Pascal, 87570 Rilhac-Rancon (FR)
(74) Mandataire: Tran, Chi-Hai
(86) Numéro de dépôt international: PCT/FR2011/051872
(87) Numéro de publication internationale: WO 2012/038631

(56) Documents cités:
- EP-A2- 0 180 389
- DE-A1- 2 447 342
- DE-A1- 3 712 715
- DE-A1- 19 721 308
- US-A- 2 646 151

## Description

La présente invention concerne un disque de friction d'embrayage, notamment pour véhicule automobile.

Un disque de friction d'embrayage est de façon générale solidaire en rotation d'un arbre dit mené et est disposé entre un plateau de réaction et un plateau de pression d'un embrayage, solidaires en rotation d'un arbre dit menant.

Lors d'une opération d'embrayage, le plateau de pression serre le disque de friction contre le plateau de réaction, le couple de l'arbre menant étant alors transmis à l'arbre mené.

Un disque de friction de l'art antérieur décrit dans le document GB 1 443 328 comporte des garnitures de frottement portées par des supports métalliques et fixées sur un disque par des plots qui sont soudés par une extrémité sur les supports des garnitures et qui s'étendent dans des orifices du disque, chaque plot comportant une tête permettant de maintenir le disque et le support de garniture en appui l'un sur l'autre.

La garniture comportant le plot comprend un trou aligné avec le plot, et un autre trou est formé dans la garniture et dans le support de garniture opposés, également aligné avec le plot. Chaque trou sert à l'introduction d'une électrode pour l'opération de soudage du plot sur le support de garniture correspondant.

Ainsi, une première électrode est amenée au contact du support de garniture sur lequel le plot doit être soudé et une seconde électrode traverse la garniture et le support de garniture opposés, pour venir en appui sur la tête du plot.

Ces nombreux trous augmentent le coût de fabrication du disque de friction et diminuent la surface utile des garnitures de frottement.

L'invention a notamment pour but d'apporter une solution simple, efficace et économique à ce problème.

A cet effet, elle propose un disque de friction d'embrayage comportant des garnitures de frottement portées par des supports métalliques et fixées par des rivets sur un disque présentant des orifices, chaque garniture de frottement étant fixée sur le disque au moyen de rivets s'étendant dans les orifices du disque et présentant une première extrémité soudée sur le support métallique portant ladite garniture de frottement et une seconde extrémité comportant une collerette en appui sur le disque. Chaque garniture ainsi fixée sur le disque est dépourvue de trou ou d'orifice aligné avec les rivets la fixant sur le disque.

Le nombre de trous ou d'orifices ménagés dans les garnitures peut ainsi être diminué de moitié. L'opération de soudage est réalisée de la manière décrite ci-après, de sorte que la suppression des trous des garnitures alignés avec les rivets de fixation n'est pas un obstacle à la réalisation du disque de friction.

La surface de frottement utile des garnitures est ainsi augmentée et le disque de friction peut être fabriqué à moindre coût.

Selon une autre caractéristique de l'invention, le support de chaque garniture fixée au disque est également dépourvu de trous ou d'orifices alignés avec les rivets de fixation de ladite garniture.

Cette caractéristique simplifie encore la réalisation du disque de friction.

Dans une réalisation classique où le disque de friction comprend des garnitures de frottement fixées sur ses deux faces opposées, au moins une garniture fixée sur une face du disque comportant des orifices alignés avec les rivets de fixation d'une garniture fixée sur l'autre face du disque.

Dans un mode de réalisation, chaque garniture fixée sur une face du disque comporte des orifices alignés avec les rivets de fixation d'une garniture fixée sur l'autre face du disque. Ce mode de réalisation permet de réaliser simultanément les opérations de fixation des deux garnitures sur le disque.

Préférentiellement, les trous ou orifices précités d'une garniture s'étendent à travers le support métallique de la garniture.

Les trous ou orifices précités de la garniture permettent le passage d'un outil de rivetage permettant de réaliser, par déformation, une collerette de maintien du disque contre le support de garniture correspondant ou le passage d'un ensemble d'électrodes comportant deux électrodes concentriques, selon le procédé de fabrication du disque de friction choisie.

De préférence, le disque est un disque progressif.

Un exemple de disque progressif est connu du document FR 1 304 067.

Selon un deuxième aspect, l'invention concerne en outre un procédé de fabrication d'un disque de friction d'embrayage selon le premier aspect de l'invention, le procédé comportant les étapes consistant à :
- souder des rivets par une extrémité sur les supports métalliques des garnitures,
- percer des trous dans au moins une garniture et la disposer de manière à ce que les rivets de ladite garniture traversent les orifices correspondant du disque et les trous de la garniture viennent en vis-à-vis des orifices du disque destinées à recevoir les rivets de fixation de la garniture opposée, et
- déformer l'extrémité libre de chaque rivet à l'aide d'un outil de rivetage de manière à former une collerette de maintien du disque contre le support de garniture correspondant.

Selon une première variante, l'on perce des trous dans les deux garnitures, l'on dispose les garnitures de part et d'autre du disque de manière à ce que les rivets de chaque garniture traversent les orifices du disque et viennent en vis-à-vis des trous de la garniture opposée et l'on déforme l'extrémité libre de chaque rivet à l'aide d'un outil de rivetage introduit par le trou en vis-à-vis. Cette variante permet de fixer les deux garnitures opposées simultanément.

Selon une seconde variante, dans un premier temps, l'on dispose une première garniture, présentant des trous, de manière à ce que ses rivets traversent les orifices du disque et l'on déforme l'extrémité libre de chaque rivet de ladite garniture de manière à former une collerette de maintien du disque contre le support de la première garniture, et, dans un deuxième temps, l'on dispose la seconde garniture contre la face du disque opposée à la première garniture, de manière à ce que les rivets de ladite seconde garniture traversent les orifices du disque et viennent en vis-à-vis des trous de la première garniture et l'on déforme l'extrémité libre de chaque rivet à l'aide d'un outil de rivetage introduit par le trou, en vis-à-vis, de la première garniture. Cette variante permet notamment de ne prévoir des trous que sur l'une des deux garnitures.

Dans un autre mode de réalisation, le procédé comporte les étapes consistant à :
- percer des trous dans au moins une garniture,
- disposer une garniture présentant des trous de telle manière que lesdits trous viennent en vis-à-vis des orifices du disque destinées à recevoir les rivets de fixations de l'autre garniture ;
- engager des rivets de façon à ce que leur première extrémité traverse un orifice du disque, les secondes extrémités des rivets comportant des collerettes de maintien, destinées à maintenir le disque contre un support de garniture correspondant,
- souder chaque première extrémité des rivets aux supports de garniture, à l'aide d'un ensemble d'électrodes comportant deux électrodes concentriques dont l'une, intérieure, est au contact de la collerette correspondante et dont l'autre, extérieure, est au contact du disque.

On remarque que la fabrication d'un tel disque de friction est peu complexe.

Selon une variante de réalisation, l'on perce des trous dans les deux garnitures, l'on dispose les garnitures de part et d'autre du disque, lesdits trous des garnitures étant situés en vis-à-vis des orifices du disque destinées à recevoir une rivet de fixation de la garniture opposée, l'on engage les rivets dans les trous des garnitures de façon à ce que leur première extrémité traverse un orifice du disque et l'on soude chaque première extrémité des rivets aux supports de garniture, à l'aide dudit ensemble d'électrodes introduit par lesdits trous des garnitures. Ainsi, les deux garnitures peuvent notamment être fixées lors d'une même opération.

Selon une autre variante, dans un premier temps, l'on dispose une première garniture, présentant des trous, en vis-à-vis du disque, les trous de la première garniture étant situés en vis-à-vis des orifices du disque destinées à recevoir un rivet de fixation de la garniture opposée, l'on engage les rivets de fixation de la première garniture de façon à ce que leur première extrémité traverse un orifice du disque, l'on soude chaque première extrémité des rivets au support de la première garniture, à l'aide de l'ensemble d'électrodes et, dans un second temps, l'on dispose la seconde garniture contre la face du disque opposée à la première garniture, l'on engage les rivets de fixation de la seconde garniture dans les trous de la première garniture de façon à ce que leur première extrémité traverse un orifice du disque et l'on soude chaque première extrémité des rivets aux supports de seconde garniture, à l'aide dudit ensemble d'électrodes introduit par les trous de la première garniture.

De manière préférée, les rivets sont soudés par décharge de condensateur.

Selon une caractéristique de l'invention, les garnitures et leurs supports sont percés directement à l'aide de forets ou par poinçonnage.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en coupe axiale d'un disque de friction,
- la figure 2 est une vue en coupe illustrant l'étape de soudage d'un rivet sur un support de garniture,
- la figure 3 est une vue en coupe axiale d'une partie du disque de friction selon l'invention, illustrant en particulier la fixation par rivets des supports de garniture au disque,
- les figures 4 et 5 sont des vues en coupe illustrant les étapes du procédé selon une variante de réalisation de l'invention,
- la figure 6 est une vue en perspective, d'un rivet utilisé dans le procédé des figures 4 et 5.

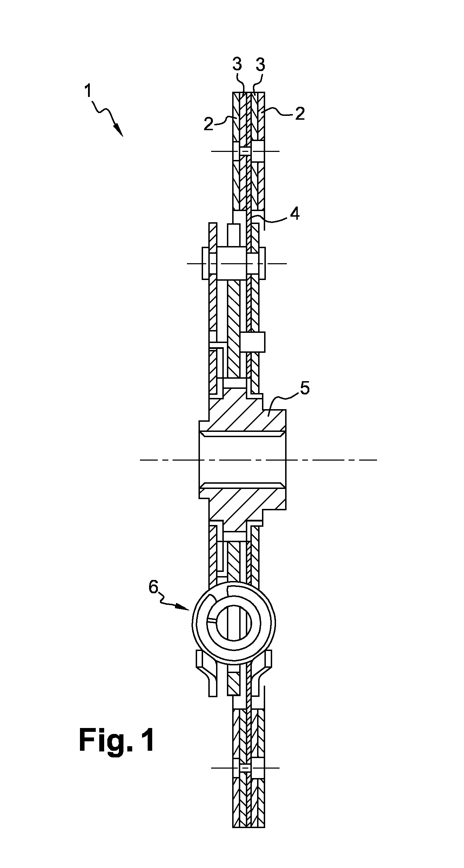

Un disque de friction d'embrayage à sec 1 est illustré à la figure 1. Il comporte deux garnitures de frottement 2 portées par des supports métalliques 3 et fixées par des rivets sur un disque 4, de part et d'autre de celui-ci. Le disque 4 est monté sur un moyeu cannelé 5 par l'intermédiaire d'un dispositif amortisseur de torsion 6.

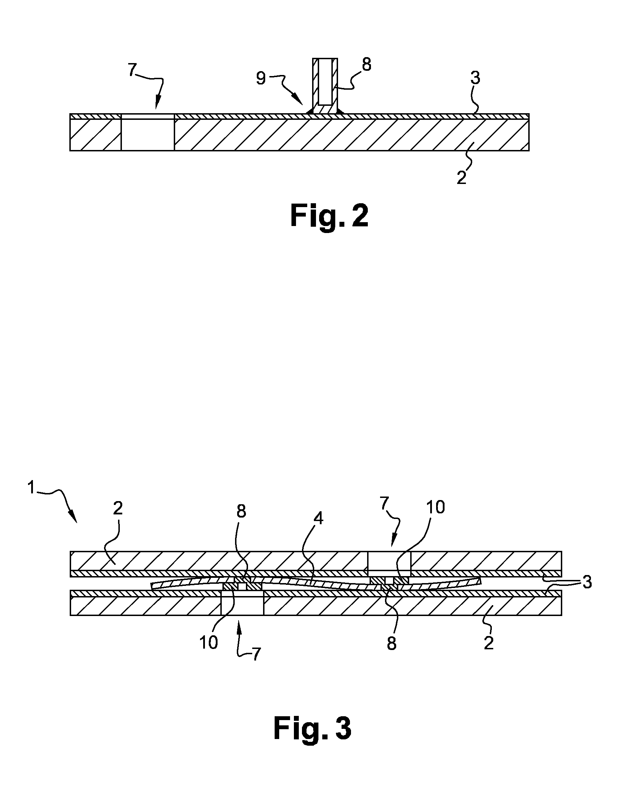

Comme représenté en figure 3, le disque 4 peut être un disque progressif. Un tel disque est également illustré aux figures 7 et 8 du brevet FR 1 304 067. Ce disque 4 se présente sous la forme d'une couronne dont la périphérie externe est fragmentée de manière à présenter des ailettes solidaires de la couronne. Ces ailettes sont ondulées et sont alternativement pliées de façon à comporter des portions décalées, de part et d'autre d'un plan moyen. Ces ailettes sont ainsi susceptibles d'être déformées élastiquement par rapprochement ou par écartement axial des garnitures de frottement 2.

On s'intéressera dans la suite de la description au procédé de réalisation d'un disque de friction selon l'invention, en particulier aux étapes de fixation des garnitures de frottement 2 sur le disque progressif 4.

Comme cela est illustré à la figure 2, chaque garniture de frottement 2 est tout d'abord collée à un support de garniture 3 formé par une tôle fine en acier ou un clinquant. Une garniture courante destinée à des véhicules automobiles de tourisme a une épaisseur de l'ordre de 3 mm et une garniture courante destinée à des véhicules industriels, notamment des poids lourds, peut avoir une épaisseur de 4,5 mm. Les supports de garniture 3, ou support métallique, ont une épaisseur de l'ordre de quelques dixièmes de millimètre, par exemple comprise entre 0,2 et 0,3 mm.

Des trous traversants 7 sont réalisés par perçage à l'aide d'un foret ou par poinçonnage dans les supports de garniture 3 et dans les garnitures 2.

Des rivets 8 se présentant sous la forme d'une douille cylindrique à fond fermé sont ensuite soudés par décharge de condensateur, par leur fond 9, sur le support de garniture correspondant 3. Les rivets 8 sont écartés des trous 7.

Les garnitures 2 sont ensuite montées en opposition et tête bêche, de part et d'autre d'un disque progressif percé 4.

Les rivets 8 et les trous 7 sont positionnés de manière à ce que chaque rivet 8 d'une garniture soit aligné avec un trou 7 d'une garniture opposée. Les rivets 8 s'étendent en outre dans les perçages ou orifices du disque progressif 4.

L'extrémité libre de chaque rivet 8 est ensuite déformée par un outil de rivetage inséré dans le trou correspondant 7, de manière à former une collerette 10 de fixation du disque progressif 4 sur le support de garniture correspondant 3.

On remarquera que chaque garniture 2 ainsi fixée sur le disque 4 est dépourvue de trous ou d'orifices alignés avec ses propres rivets de fixation 8.

Chaque garniture 2 est fixée de manière simple et rapide au disque progressif 4, le nombre de trous dans les garnitures étant en outre limité, de manière à maximiser les surfaces de frottement des garnitures.

De plus, les rivets 8 sont dimensionnés de manière à ce que les collerettes 10 ne s'étendent pas au-delà des supports de garniture 3, à l'intérieur des garnitures 2 opposées, de façon à permettre d'user ces dernières sur la quasi totalité de leur épaisseur.

Dans une variante de réalisation non illustrée, l'on procède, dans un premier temps, à la fixation de l'une des garnitures 2 sur le disque 4, puis dans un second temps à la fixation de l'autre garniture 2 sur le disque 4. Ainsi, dans ce cas, il est possible de se passer de trou dans la garniture 2 fixée en second, et dans le support 3 correspondant. En effet, les rivets 8 de fixation de la première garniture 2 sont dans ce cas déformés alors que la seconde garniture 2 n'est pas positionnée par rapport au disque 4.

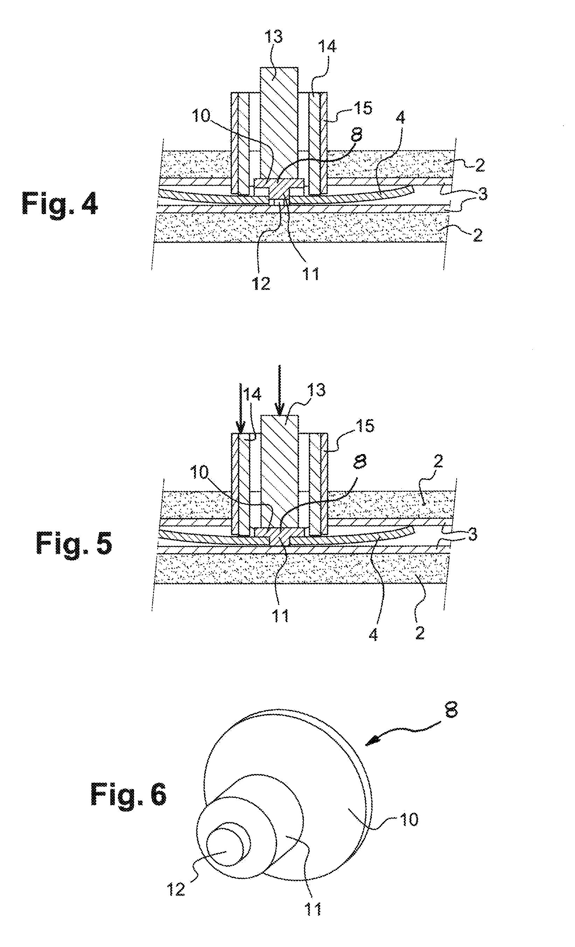

Les figures 4 et 5 représente une variante de réalisation de l'invention consistant, de la même manière que précédemment, à percer des trous 7 dans les garnitures 2 et dans les supports de garniture 3, puis à disposer les garnitures 2 et les supports 3 de part et d'autre d'un disque percé 4. Les trous 7 sont alors situés en regard des perçages, ou orifices, du disque 4.

Des rivets 8 sont alors engagés dans les trous 7 des garnitures 2 et des supports de garniture 3.

Comme cela est mieux visible en figure 6, chaque rivet 8 comporte une partie cylindrique formant une première extrémité 11 et une collerette 10 ou tête élargie, formant une seconde extrémité. La première extrémité 11 est pourvue d'un téton de soudure 12, dont la fonction sera mieux expliquée dans ce qui suit.

Les rivets 8 sont engagés de façon à ce que les premières extrémités 11 traversent les perçages du disque 4 et que les tétons de soudure 12 soit en appui contre le support de garniture correspondant 3.

Un ensemble d'électrodes est alors engagé dans les trous 7 des garnitures 2 et des supports de garniture 3, cet ensemble comportant une électrode interne 13 et une électrode externe 14 écartées l'une de l'autre. La surface périphérique externe de l'électrode externe 14 est recouverte d'une couche isolante 15. De cette manière, on évite tout contact entre l'électrode externe 14 et la garniture 2 ou le support de garniture 3.

L'extrémité libre de l'électrode externe 14 vient au contact du disque percé 4, autour du perçage correspondant, et l'extrémité libre de l'électrode interne 13 vient au contact de la collerette correspondante 10.

Cet ensemble d'électrode permet ainsi de réaliser le soudage de la première extrémité 11 du rivet 8 au support de garniture 3. Après soudage, le téton de soudure 12 ayant disparu, le disque 4 est maintenu contre le support de garniture 3 par la collerette 10.

Dans une autre variante non illustrée, l'on procède, dans un premier temps, à la fixation de l'une des garnitures 2 sur le disque 4 à l'aide desdites électrodes de soudage, puis dans un second temps à la fixation de l'autre garniture 2 sur le disque 4. Ainsi, il est également possible de se passer de trou dans la garniture 2 fixée dans le second temps.

## Revendications

1. Disque de friction d'embrayage (1) comportant des garnitures de frottement (2) portées par des supports métalliques (3) et fixées sur un disque (4) présentant des orifices, chaque garniture de frottement (2) étant fixée sur le disque (4) au moyen de rivets (8) s'étendant dans les orifices du disque (4) et présentant une première extrémité (9) soudée sur le support métallique (3) portant ladite garniture de frottement (2) et une seconde extrémité comportant une collerette (10) en appui sur le disque (4), **caractérisé en ce que** chaque garniture de frottement (2) ainsi fixée sur le disque (4) est dépourvue de trou ou d'orifice aligné avec les rivets (8) la fixant sur le disque (4).

2. Disque de friction (1) selon la revendication 1, **caractérisé en ce que** le support métallique (3) de chaque garniture (2) fixée au disque (4) est également dépourvu de trou ou d'orifice aligné avec les rivets de fixation (8) de ladite garniture (2).

3. Disque de friction (1) selon la revendication 1 ou 2, **caractérisé en ce qu'**il comprend des garnitures de frottement (2) fixées sur les deux faces opposées du disque (4), au moins une garniture (2) fixée sur une face du disque (4) comportant des orifices (7) alignés avec les rivets de fixation (8) d'une garniture (2) fixée sur l'autre face du disque (4).

4. Disque de friction (1) selon la revendication 3, **caractérisé en ce que** chaque garniture (2) fixée sur une face du disque (4) comporte des orifices (7) alignés avec les rivets de fixation (8) d'une garniture (2) fixée sur l'autre face du disque (4).

5. Disque de friction (1) selon la revendication 3 ou 4, **caractérisé en ce que** les orifices précités (7) d'une garniture (2) s'étendent à travers le support métallique (3) de la garniture (2).

6. Disque de friction (1) selon l'une des revendications 1 à 5, **caractérisé en ce que** le disque est un disque progressif (4).

7. Procédé de fabrication d'un disque de friction d'embrayage (1) selon l'une des revendications 1 à 6, comportant les étapes consistant à :
- souder des rivets (8) par une extrémité (9) sur les supports métalliques (3) des garnitures (2),
- percer des trous (7) dans au moins une garniture (2) et la disposer de manière à ce que les rivets (8) de ladite garniture (2) traversent les orifices correspondant du disque (4) et les trous de la garniture (2) viennent en vis-à-vis des orifices du disque destinée à recevoir les rivets (8) de fixation de la garniture (2) opposée , et
- déformer l'extrémité libre de chaque rivet (8) à l'aide d'un outil de rivetage de manière à former une collerette (10) de maintien du disque (4) contre le support de garniture correspondant (3).

8. Procédé de fabrication d'un disque de friction d'embrayage (1) selon la revendication 7, **caractérisé en ce que** l'on perce des trous (7) dans les deux garnitures (2), l'on dispose les garnitures (2) de part et d'autre du disque (4) de manière à ce que les rivets (8) de chaque garniture traversent les orifices du disque (4) et viennent en vis-à-vis des trous (7) de la garniture (2) opposée et l'on déforme l'extrémité libre de chaque rivet (8) à l'aide d'un outil de rivetage introduit par le trou (7) en vis-à-vis.

9. Procédé de fabrication d'un disque de friction d'embrayage selon la revendication 7, **caractérisé en ce que**, dans un premier temps, l'on dispose une première garniture (2), présentant des trous (7), de manière à ce que ses rivets (7) traversent les orifices du disque (4) et l'on déforme l'extrémité libre de chaque rivet de la première garniture (2) de manière à former une collerette (10) de maintien du disque (4) contre le support de la première garniture (3), et, dans un deuxième temps, l'on dispose la seconde garniture (2) contre la face du disque opposée à la première garniture (2), de manière à ce que les rivets (7) de ladite seconde garniture (2) traversent les orifices du disque (4) et viennent en vis-à-vis des trous de la première garniture (2) et l'on déforme l'extrémité libre de chaque rivet à l'aide d'un outil de rivetage introduit par le trou (2), en vis-à-vis, de la première garniture (2).

10. Procédé de fabrication d'un disque de friction d'embrayage (1) selon l'une des revendications 1 à 6, comportant les étapes consistant à :
- percer des trous (7) dans au moins une garniture (2),
- disposer une garniture (2) présentant des trous (7) de telle manière que lesdits trous(7) viennent en vis-à-vis des orifices du disque (4) destinées à recevoir les rivets (8) de fixations de l'autre garniture (2) ;
- engager des rivets (8) de façon à ce que leur première extrémité (11) traverse un orifice du disque (4), les secondes extrémités des rivets comportant des collerettes de maintien (10), destinées à maintenir le disque (4) contre un support de garniture correspondant (3),
- souder chaque première extrémité (11) des rivets (8) aux supports de garniture (3), à l'aide d'un ensemble d'électrodes comportant deux électrodes concentriques dont l'une, intérieure (13), est au contact de la collerette correspondante (10) et dont l'autre, extérieure (14), est au contact du disque (4).

11. Procédé de fabrication d'un disque de friction d'embrayage selon la revendication 10, **caractérisé en ce que** l'on perce des trous (7) dans les deux garnitures (2), l'on dispose les garnitures (2) de part et d'autre du disque (4), lesdits trous des garnitures (2) étant situés en vis-à-vis des orifices du disque (4) destinées à recevoir une rivet de fixation de la garniture (2) opposée, l'on engage les rivets (8) dans les trous des garnitures (2) de façon à ce que leur première extrémité (11) traverse un orifice du disque (4) et l'on soude chaque première extrémité (11) des rivets (8) aux supports de garniture (3), à l'aide dudit ensemble d'électrodes introduit par lesdits trous des garnitures (2).

12. Procédé de fabrication d'un disque de friction d'embrayage selon la revendication 10, **caractérisé en ce que**, dans un premier temps, l'on dispose une première garniture (2), présentant des trous (7), en vis-à-vis du disque (4), les trous de la première garniture (2) étant situés en vis-à-vis des orifices du disque (4) destinées à recevoir un rivet (8) de fixation de la garniture opposée (2), l'on engage les rivets (8) de fixation de la première garniture (2) de façon à ce que leur première extrémité (11) traverse un orifice du disque (4), l'on soude chaque première extrémité (11) des rivets (8) au support de la première garniture (3), à l'aide de l'ensemble d'électrodes et, dans un second temps, l'on dispose la seconde garniture (2) contre la face du disque (4) opposée à la première garniture (2), l'on engage les rivets (8) de fixation de la seconde garniture (2) dans les trous (7) de la première garniture (2) de façon à ce que leur première extrémité (11) traverse un orifice du disque (4) et l'on soude chaque première extrémité (11) des rivets (8) aux supports de seconde garniture (3), à l'aide dudit ensemble d'électrodes introduit par les trous (7) de la première garniture (2).

13. Procédé selon l'une des revendications 10 à 12, **caractérisé en ce que** les rivets (8) sont soudés par décharge de condensateur.

14. Procédé selon l'une des revendications 7 à 13, **caractérisé en ce que** les garnitures (2) et leurs supports (3) sont percés directement à l'aide de forets ou par poinçonnage.

## Patentansprüche

1. Kupplungsreibscheibe (1), die Reibbeläge (2) aufweist, welche von metallischen Trägern (3) getragen werden und an einer Öffnungen aufweisenden Scheibe (4) befestigt sind, wobei jeder Reibbelag (2) an der Scheibe (4) mittels Nieten (8) befestigt ist, die sich in den Öffnungen der Scheibe (4) erstrecken und ein erstes Ende (9), das auf den den Reibbelag (2) tragenden metallischen Träger (3) geschweißt ist, und ein zweites Ende aufweisen, das einen auf der Scheibe (4) aufliegenden Kragen (10) aufweist, **dadurch gekennzeichnet, dass** jeder so an der Scheibe (4) befestigte Reibbelag (2) kein Loch oder Öffnung aufweist, das(die) mit den ihn an der Scheibe (4) befestigenden Nieten (8) ausgerichtet ist.

2. Reibscheibe (1) nach Anspruch 1, **dadurch gekennzeichnet, dass** der metallische Träger (3) jedes an der Scheibe (4) befestigten Belags (2) ebenfalls kein Loch oder Öffnung aufweist, das(die) mit den Befestigungsnieten (8) des Belags (2) ausgerichtet ist.

3. Reibscheibe (1) nach Anspruch 1 oder 2, **dadurch gekennzeichnet, dass** sie Reibbeläge (2) enthält, die an den zwei entgegengesetzten Seiten der Scheibe (4) befestigt sind, wobei mindestens ein an einer Seite der Scheibe (4) befestigter Belag (2) Öffnungen (7) aufweist, die mit den Befestigungsnieten (8) eines an der anderen Seite der Scheibe (4) befestigten Belags (2) ausgerichtet sind.

4. Reibscheibe (1) nach Anspruch 3, **dadurch gekennzeichnet, dass** jeder an einer Seite der Scheibe (4) befestigte Belag (2) Öffnungen (7) aufweist, die mit den Befestigungsnieten (8) eines an der anderen Seite der Scheibe (4) befestigten Belags (2) ausgerichtet sind.

5. Reibscheibe (1) nach Anspruch 3 oder 4, **dadurch gekennzeichnet, dass** die erwähnten Öffnungen (7) eines Belags (2) sich durch den metallischen Träger (3) des Belags (2) hindurch erstrecken.

6. Reibscheibe (1) nach einem der Ansprüche 1 bis 5, **dadurch gekennzeichnet, dass** die Scheibe eine progressive Scheibe (4) ist.

7. Verfahren zur Herstellung einer Kupplungsreibscheibe (1) nach einem der Ansprüche 1 bis 6, das die Schritte aufweist, die darin bestehen:
- Nieten (8) mit einem Ende (9) auf die metallischen Träger (3) der Beläge (2) zu schweißen,
- Löcher (7) in mindestens einen Belag (2) zu bohren und ihn so anzuordnen, dass die Nieten (8) des Belags (2) die entsprechenden Öffnungen der Scheibe (4) durchqueren, und die Löcher des Belags (2) den Öffnungen der Scheibe gegenüberliegen, die dazu bestimmt sind, die Befestigungsnieten (8) des entgegengesetzten Belags (2) aufzunehmen, und
- das freie Ende jeder Niete (8) mit Hilfe eines Nietwerkzeugs zu verformen, um einen Kragen (10) zum Halt der Scheibe (4) gegen den entsprechenden Belagträger (3) zu bilden.

8. Verfahren zur Herstellung einer Kupplungsreibscheibe (1) nach Anspruch 7, **dadurch gekennzeichnet, dass** Löcher (7) in die zwei Beläge (2) gebohrt werden, die Beläge (2) zu beiden Seiten der Scheibe (4) so angeordnet werden, dass die Nieten (8) jedes Belags die Öffnungen der Scheibe (4) durchqueren und den Löchern (7) des entgegengesetzten Belags (2) gegenüberliegen, und das freie Ende jeder Niete (8) mit Hilfe eines Nietwerkzeugs verformt wird, das durch das gegenüberliegende Loch (7) eingeführt wird.

9. Verfahren zur Herstellung einer Kupplungsreibscheibe nach Anspruch 7, **dadurch gekennzeichnet, dass** zuerst ein Löcher (7) aufweisender erster Belag (2) so angeordnet wird, dass seine Nieten (7) die Öffnungen der Scheibe (4) durchqueren, und das freie Ende jeder Niete des ersten Belags (2) verformt wird, um einen Kragen (10) für den Halt der Scheibe (4) gegen den Träger (3) des ersten Belags zu formen, und dann der zweite Belag (2) gegen die Seite der Scheibe entgegengesetzt zum ersten Belag (2) so angeordnet wird, dass die Nieten (7) des zweiten Belags (2) die Öffnungen der Scheibe (4) durchqueren und den Löchern des ersten Belags (2) gegenüberliegen, und das freie Ende jeder Niete mit Hilfe eines durch das gegenüberliegende Loch (2) des ersten Belags (2) eingeführtes Nietwerkzeug verformt wird.

10. Verfahren zur Herstellung einer Kupplungsreibscheibe (1) nach einem der Ansprüche 1 bis 6, das die Schritte aufweist, die darin bestehen:
- Löcher (7) in mindestens einen Belag (2) zu bohren,
- einen Löcher (7) aufweisenden Belag (2) so anzuordnen, dass die Löcher (7) Öffnungen der Scheibe (4) gegenüberliegen, die dazu bestimmt sind, die Befestigungsnieten (8) des anderen Belags (2) aufzunehmen;
- Nieten (8) derart einzuführen, dass ihr erstes Ende (11) eine Öffnung der Scheibe (4) durchquert, wobei die zweiten Enden der Nieten Haltekragen (10) aufweisen, die dazu bestimmt sind, die Scheibe (4) gegen einen entsprechenden Belagträger (3) zu halten,
- jedes erste Ende (11) der Nieten (8) mit Hilfe einer Einheit von Elektroden an die Belagträger (3) zu schweißen, die zwei konzentrische Elektroden aufweist, von denen eine, die innere (13), mit dem entsprechenden Kragen (10) in Kontakt ist, und die andere, äußere (14), mit der Scheibe (4) in Kontakt ist.

11. Verfahren zur Herstellung einer Kupplungsreibscheibe nach Anspruch 10, **dadurch gekennzeichnet, dass** Löcher (7) in die zwei Beläge (2) gebohrt werden, die Beläge (2) zu beiden Seiten der Scheibe (4) angeordnet werden, wobei die Löcher der Beläge (2) den Öffnungen der Scheibe (4) gegenüberliegen, die dazu bestimmt sind, eine Befestigungsniete des entgegengesetzten Belags (2) aufzunehmen, die Nieten (8) in die Löcher der Beläge (2) so eingeführt werden, dass ihr erstes Ende (11) eine Öffnung der Scheibe (4) durchquert, und jedes erste Ende (11) der Nieten (8) mit Hilfe der durch die Löcher der Beläge (2) eingeführten Einheit von Elektroden an die Belagträger (3) geschweißt wird.

12. Verfahren zur Herstellung einer Kupplungsreibscheibe nach Anspruch 10, **dadurch gekennzeichnet, dass** zuerst ein Löcher (7) aufweisender erster Belag (2) gegenüber der Scheibe (4) angeordnet wird, wobei die Löcher des ersten Belags (2) Öffnungen der Scheibe (4) gegenüberliegen, die dazu bestimmt sind, eine Befestigungsniete (8) des entgegengesetzten Belags (2) aufzunehmen, die Befestigungsnieten (8) des ersten Belags (2) so eingeführt werden, dass ihr erstes Ende (11) eine Öffnung der Scheibe (4) durchquert, jedes erste Ende (11) der Nieten (8) mit Hilfe der Einheit von Elektroden an den Träger des ersten Belags (3) geschweißt wird, und dann der zweite Belag (2) gegen die Seite der Scheibe (4) entgegengesetzt zum ersten Belag (2) angeordnet wird, die Befestigungsnieten (8) des zweiten Belags (2) in die Löcher (7) des ersten Belags (2) so eingeführt werden, dass ihr erstes Ende (11) eine Öffnung der Scheibe (4) durchquert, und jedes erste Ende (11) der Nieten (8) mit Hilfe der durch die Löcher (7) des ersten Belags (2) eingeführten Einheit von Elektroden an die Träger (3) des zweiten Belags geschweißt wird.

13. Verfahren nach einem der Ansprüche 10 bis 12, **dadurch gekennzeichnet, dass** die Nieten (8) durch Kondensatorentladung geschweißt werden.

14. Verfahren nach einem der Ansprüche 7 bis 13, **dadurch gekennzeichnet, dass** die Beläge (2) und ihre Träger (3) direkt mit Hilfe von Bohrern oder durch Stanzen durchbohrt werden.

## Claims

1. Clutch friction disc (1) comprising friction linings (2) borne by metal backings (3) and fixed to a disc (4) that has orifices, each friction lining (2) being fixed to the disc (4) by means of rivets (8) extending through the orifices in the disc (4) and having a first end (9) welded to the metal backing (3) bearing the said friction lining (2) and a second end comprising a flange (10) pressing against the disc (4), **characterized in that** each friction lining (2) thus fixed to the disc (4) has no hole or orifice aligned with the rivets (8) that fix it to the disc (4).

2. Friction disc (1) according to Claim 1, **characterized in that** the metal backing (3) of each lining (2) fixed to the disc (4) likewise has no hole or orifice aligned with the rivets (8) that secure the said lining (2).

3. Friction disc (1) according to Claim 1 or 2, **characterized in that** it comprises friction linings (2) fixed to the two opposite faces of the disc (4), at least one lining (2) that is fixed to one face of the disc (4) comprising orifices (7) that are aligned with the rivets (8) that fix a lining (2) that is fixed to the other face of the disc (4).

4. Friction disc (1) according to Claim 3, **characterized in that** each lining (2) fixed to one face of the disc (4) comprises orifices (7) that are aligned with the rivets (8) that fix a lining (2) that is fixed to the other face of the disc (4).

5. Friction disc (1) according to Claim 3 or 4, **characterized in that** the abovementioned orifices (7) in a lining (2) extend through the metal backing (3) of the lining (2).

6. Friction disc (1) according to one of Claims 1 to 5, **characterized in that** the disc is a progressive disc (4).

7. Method of manufacturing a clutch friction disc (1) according to one of Claims 1 to 6, comprising the steps involving:
- welding rivets (8) by one end (9) to the metal backings (3) of the linings (2),
- piercing holes (7) in at least one lining (2) and arranging the lining in such a way that the rivets (8) of the said lining (2) pass through the corresponding orifices in the disc (4) and the holes in the lining (2) come to face orifices in the disc intended to accept the rivets (8) for fixing the opposite lining (2), and
- deforming of the free end of each rivet (8) using a riveting tool so as to form a flange (10) that holds the disc (4) against the corresponding lining backing (3).

8. Method of manufacturing a clutch friction disc (1) according to Claim 7, **characterized in that** holes (7) are pierced in the two linings (2), the linings (2) are positioned one on each side of the disc (4) so that the rivets (8) of each lining pass through the orifices in the disc (4) and come to face the holes (7) in the opposite lining (2), and the free end of each rivet (8) is deformed using a riveting tool inserted via the hole (7) opposite.

9. Method of manufacturing a clutch friction disc according to Claim 7, **characterized in that** first of all a first lining (2), which has holes (7), is arranged in such a way that the rivets (7) thereof pass through the orifices in the disc (4), and the free end of each rivet of the first lining (2) is deformed in such a way as to form a flange (10) that holds the disc (4) against the backing of the first lining (3), then secondly the second lining (2) is positioned against the opposite face of the disc to the first lining (2) so that the rivets (7) of the said second lining (2) pass through the orifices in the disc (4) and come to face the holes of the first lining (2) and the free end of each rivet is deformed using a riveting tool inserted via the hole (2) opposite, in the first lining (2).

10. Method of manufacturing a clutch friction disc (1) according to one of Claims 1 to 6, comprising the steps involving:
- piercing holes (7) in at least one lining (2),
- arranging a lining (2) that has holes (7) in such a way that the said holes (7) come to face the orifices in the disc (4) which are intended to accept the rivets (8) for the fixing of the other lining (2);
- engaging rivets (8) in such a way that the first end (11) thereof passes through an orifice in the disc (4), the second ends of the rivets comprising retaining flanges (10) which are intended to hold the disc (4) against a corresponding lining backing (3),
- welding each first end (11) of the rivets (8) to the lining backings (3) using a set of electrodes comprising two concentric electrodes of which the inner one (13) is in contact with the corresponding flange (10) and the outer one (14) is in contact with the disc (4).

11. Method of manufacturing a clutch friction disc according to Claim 10, **characterized in that** holes (7) are pierced in the two linings (2), the linings (2) are arranged one on each side of the disc (4), the said holes in the linings (2) being situated facing the orifices in the disc (4) which are intended to accept a rivet for the fixing of the opposite lining (2), and the rivets (8) are engaged in the holes in the linings (2) in such a way that the first end (11) thereof passes through an orifice in the disc (4) and each first end (11) of the rivets (8) is welded to the lining backings (3) using the said set of electrodes introduced via the said holes in the linings (2).

12. Method of manufacturing a clutch friction disc according to Claim 10, **characterized in that** first of all a first lining (2) with holes (7), is positioned facing the disc (4) with the holes in the first lining (2) situated facing the orifices in the disc (4) which are intended to accept a rivet (8) for fixing the opposite lining (2), the fixing rivets (8) for the first lining (2) are engaged in such a way that the first end (11) thereof passes through an orifice in the disc (4), each first end (11) of the rivets (8) is welded to the backing of the first lining (3), using the set of electrodes and, secondly, the second lining (2) is positioned against the opposite face of the disc (4) to the first lining (2), the fixing rivets (8) for the second lining (2) are engaged in the holes (7) in the first lining (2) so that the first end (11) thereof passes through an orifice in the disc (4), and each first end (11) of the rivets (8) is welded to the second-lining backings (3) using the said set of electrodes introduced through the holes (7) in the first lining (2).

13. Method according to one of the Claims 10 to 12, **characterized in that** the rivets (8) are welded using capacitor discharge welding.

14. Method according to one of Claims 7 to 13 **characterized in that** the linings (2) and their backings (3) are pierced directly using drill bits or by punching.
